# FASCICULE DE BREVET EUROPEEN

(11) **EP 3 350 028 B1**
(45) Date de publication et mention de la délivrance du brevet: **04.11.2020**
(21) Numéro de dépôt: 16766925.8
(22) Date de dépôt: 14.09.2016
(51) Int. Cl.: B60R 21/261, B21D 39/03, F42B 3/04

(54) **GÉNÉRATEUR DE GAZ**
GASGENERATOR
GAS GENERATOR

(30) Priorité: 15.09.2015 FR 1558633
(43) Date de publication de la demande: 25.07.2018
(73) Titulaire: Autoliv Development AB, 447 83 Vårgårda (SE)
(72) Inventeur: NABBING, Magnus, 44192 Alingsås (SE); ADERUM, Tobias, 41470 Göteborg (SE); SVEDJENÄS, Stefan, 44157 Alingsås (SE); HANSSON, Mikael, 44157 Alingsås (SE)
(74) Mandataire: Poindron, Cyrille
(86) Numéro de dépôt international: PCT/EP2016/071669
(87) Numéro de publication internationale: WO 2017/046150

(56) Documents cités:
- EP-A1- 0 502 761
- EP-A2- 0 447 251
- DE-A1- 19 626 463
- GB-A- 1 403 823
- US-A1- 2005 194 771

## Description

La présente invention concerne de manière générale un générateur de gaz avec un diffuseur de gaz utilisé pour actionner un dispositif de sécurité automobile.

Le document FR2890022A1 décrit par exemple un générateur de gaz utilisé dans un module de sécurité pour gonfler un coussin gonflable autrement appelé airbag. Un tel générateur de gaz comprend une chambre de tranquillisation autrement appelée chambre de diffusion qui reçoit les gaz de gonflage générés dans une chambre de combustion, et les diffuse dans le dispositif de sécurité, ici le coussin gonflable.

Dans le cas où le générateur de gaz est tubulaire, la chambre de diffusion est formée à partir d'un tube qu'il faut poinçonner et couper à longueur. De telles opérations sont complexes et nécessitent un équipement de fabrication complexe, ce qui provoque des coûts de fabrication élevés.

Un but de la présente invention est de répondre aux inconvénients du document de l'art antérieur mentionnés ci-dessus et en particulier, tout d'abord, de proposer un générateur de gaz dont le diffuseur de gaz définit une chambre de diffusion, mais qui est simple et économique à fabriquer.

Pour cela un premier aspect de l'invention concerne un générateur de gaz avec un diffuseur de gaz comprenant une paroi définissant au moins une chambre de diffusion agencée pour recevoir des gaz de gonflage du générateur de gaz et les diffuser vers un organe de sécurité automobile, caractérisé en ce que la paroi est formée à partir d'un flan de tôle et comprend au moins deux ancrages de formes complémentaires imbriqués les uns dans les autres pour former une zone de fermeture du flan de tôle. Selon la présente mise en œuvre, le diffuseur de gaz du générateur de gaz peut être fabriqué à partir d'un flan de tôle, ce qui permet de poinçonner à plat et avec un outillage simple des trous pour diffuser des gaz vers l'organe de sécurité. Il en va de même pour les ancrages, dont les formes complémentaires sont formées à plat, par exemple par poinçonnage, aux extrémités du flan de tôle qu'il suffira de relier ensuite par roulage par exemple. Selon cette mise en œuvre, les ancrages sont formées à partir d'une découpe particulière du flan de tôle et ne présentent donc aucune surépaisseur ou relief par rapport au flan de tôle. Une découpe sur une première extrémité du flan de tôle définit une forme femelle, qui correspond alors à une forme mâle complémentaire située en regard sur l'autre extrémité du flan de tôle, opposée à la première extrémité.

Autrement dit, le diffuseur de gaz du générateur de gaz comprend une paroi, et cette paroi est fermée par au moins un premier ancrage qui est imbriqué dans au moins un deuxième ancrage dont la forme est complémentaire à celle dudit au moins un premier ancrage.

Avantageusement, chaque ancrage est agencé pour s'engager en butée mécanique avec un ancrage adjacent.

Avantageusement, les formes complémentaires desdits au moins deux ancrages présentent chacune une projection dans un plan tangent à la paroi, la projection comprenant au moins une portion périphérique inclinée qui est orientée d'un angle de dépouille prédéterminé avec une direction tangentielle, pour former avec la portion périphérique inclinée d'un ancrage adjacent la portion de retenue à un effort créé par une pression de diffusion appliquée par les gaz de gonflage dans la chambre de diffusion.

Avantageusement, le diffuseur de gaz présente une direction axiale, et la direction tangentielle est comprise dans un plan normal à la direction axiale. Si le diffuseur de gaz présente une direction axiale, alors, on peut définir la direction tangentielle comme étant une direction tangentielle normale à un rayon du diffuseur de gaz, dans un plan de coupe transversal à la direction axiale du diffuseur de gaz.

Avantageusement, l'angle de dépouille est compris dans une plage de valeurs allant de 20° à 40°.

Avantageusement, lesdits au moins deux ancrages de formes complémentaires sont des dents évasées. De telles dents évasées (ou encore tenons ou agrafes) s'engagent les unes dans les autres. Par exemple, ces formes complémentaires peuvent avoir la forme de queues d'aronde.

Avantageusement, au moins un desdits au moins deux ancrages comprend un emboutissage ou bosselage pour verrouiller ledit au moins un ancrage avec un ancrage adjacent. Un tel emboutissage permet de générer une déformation locale de la matière de la paroi du diffuseur de gaz au niveau d'au moins un des ancrages, pour réduire les jeux d'assemblage entre ancrages complémentaires et/ou pour assurer un contact entre les ancrages, ce qui augmente la résistance, mais aussi l'étanchéité de la chambre de diffusion. Cette mise en œuvre permet de limiter les fuites parasites lors du fonctionnement du générateur de gaz et garantir qu'aucune force parasite ne vienne s'appliquer sur le générateur. En effet, ce dernier, s'il est mis à feu lorsqu'il repose sur le sol, ne doit pas sortir d'un certain périmètre (pour garantir la sécurité des personnes alentour notamment).

Avantageusement, le diffuseur de gaz comprend au moins une portion en saillie dans la chambre de diffusion, telle qu'une patte, réalisée par découpe partielle de la paroi et pliage. Une telle opération de découpe ou poinçonnage est aisée à réaliser à plat avant fermeture du flan de tôle, alors qu'elle est particulièrement compliquée à partir d'un tube (en effet, il faut alors prévoir un noyau à insérer dans le tube pour reprendre les efforts de poinçonnage-pliage).

Avantageusement, ladite au moins une portion en saillie dans la chambre de diffusion est agencée pour supporter et/ou positionner un composant du générateur de gaz dans la chambre de diffusion.

Avantageusement, le flan de tôle est en acier présentant une résistance élastique (Re) supérieure ou égale à 300MPa, et un allongement avant rupture (A%) supérieur ou égal à 20%. Un tel acier se prête bien aux contraintes de poinçonnage et roulage ultérieur.

Avantageusement, le diffuseur de gaz présente au moins une extrémité soudée sur une autre pièce du générateur de gaz. Une telle soudure peut être pratiquée sur la périphérie du diffuseur de gaz, et au moins dans la zone de fermeture, ce qui augmente encore la résistance du diffuseur de gaz. On peut envisager de souder le diffuseur de gaz sur une chambre de gaz sous pression par exemple.

Avantageusement, le diffuseur de gaz présente un diamètre extérieur et une longueur inférieure au double du diamètre extérieur. En combinaison avec la mise en œuvre avec une soudure, un tel diffuseur de gaz est très résistant à une pression interne. En effet, la soudure ancre le diffuseur de gaz sur une autre pièce, et le faible ration longueur / diamètre limite une expansion de la chambre de diffusion, à cause des effets de bord.

Un deuxième aspect de l'invention concerne un module de sécurité comprenant au moins un générateur de gaz selon le premier aspect de l'invention.

Un troisième aspect de l'invention concerne un véhicule automobile comprenant au moins un module de sécurité selon le deuxième aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue isométrique d'un diffuseur de gaz selon l'invention, réalisé à partir d'un flan de tôle et comprenant une zone de fermeture ;
- la figure 2 représente une vue du diffuseur de gaz de la figure 1, avec la zone de fermeture vue de face.

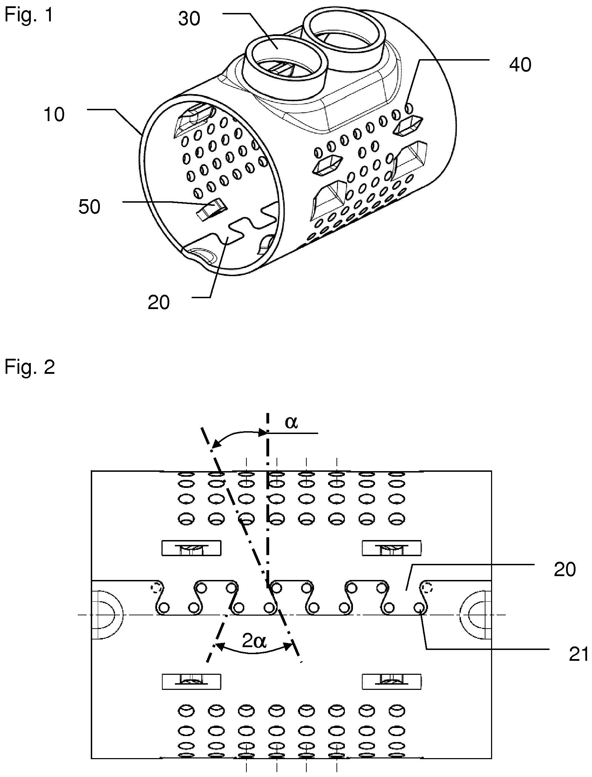

La figure 1 représente un diffuseur de gaz définissant une chambre de diffusion pour un générateur de gaz. En effet, le diffuseur de gaz de la figure 1 présente une paroi 10 de forme tubulaire cylindrique (c'est-à-dire qu'il présente au moins une section transversale avec un périmètre fermé), et peut accueillir de chaque côté un ensemble de génération de gaz de gonflage. Lors du fonctionnement, le diffuseur de gaz reçoit dans sa partie intérieure (la chambre de diffusion) des gaz de gonflage sous pression, et peut les diffuser vers un organe de sécurité par une multitude de trous de diffusion 40.

A titre d'exemple, les ensembles de génération de gaz peuvent être des bouteilles de gaz sous pression, ou des ensembles contenant une substance pyrotechnique, ou une combinaison des deux. Dans le cas de bouteilles de gaz sous pression, on peut envisager d'utiliser des gaz neutres, ou des gaz qui peuvent participer à une réaction chimique, telle qu'une combustion par exemple. Dans ce dernier cas, un exemple de gaz réactif peut être un couple oxydo-réducteur tel que hydrogène oxygène.

Le diffuseur de gaz de la figure 1 présente une forme généralement tubulaire cylindrique avec une section transversale circulaire, mais l'invention n'est pas limitée à cette forme, et on peut envisager que la section transversale du diffuseur de gaz soit d'une forme ovale, polygonale, ou quelconque. On peut envisager de fermer une extrémité du diffuseur de gaz avec une pièce rapportée s'il n'est prévu de fournir des gaz de gonflage que d'un seul côté.

Pour commander le générateur de gaz, on peut prévoir des sous-ensembles d'allumage électro pyrotechniques, que l'on peut fixer sur le diffuseur de gaz par des collets de fixation 30 qui peuvent être sertis sur les sous-ensembles d'allumage. Les sous-ensembles d'allumage peuvent servir à piloter un mécanisme qui peut être positionné dans la chambre de diffusion par des pattes 50 qui sont recourbées vers l'intérieur e la chambre de diffusion.

Lors du fonctionnement, la chambre de diffusion définie par le diffuseur de gaz reçoit des gaz sous pression, et il peut y régner par exemple lors du fonctionnement du générateur de gaz une pression comprise entre 5 et 10MPa par exemple.

Afin de résister à cette pression de diffusion, on peut réaliser le diffuseur de gaz avec de l'acier dont la résistance élastique Re est de 300MPa au minimum, avec une paroi 10 de 1.5 millimètres d'épaisseur.

Afin de réaliser aisément les trous de diffusion 40, les collets de fixation 30 et également les pattes 50 qui sont réalisées par une découpe partielle de la paroi 10 puis un pliage, il est avantageux de procéder à ces opérations "à plat", c'est-à-dire à partir d'un flan de tôle. Ainsi, les outillages de poinçonnage, découpe, pliage sont simplifiés par rapport au cas de figure où l'on partirait d'un tube par exemple.

Cependant, s'il est prévu de partir d'un flan de tôle, il faut ensuite le rouler et proposer une fermeture résistante au fonctionnement d'un générateur de gaz utilisé pour actionner un dispositif de sécurité automobile. A cet effet, l'invention propose une zone de fermeture 20 avec des ancrages de formes complémentaires imbriquées les unes dans les autres.

Dans le détail, l'invention propose d'agencer des ancrages aux deux extrémités du flan de tôle qui seront ensuite jointes pour fermer un périmètre du diffuseur de gaz. Ces ancrages sont découpés lorsque le flan de tôle est encore à plat, et leurs formes sont prévues d'être complémentaire pour s'imbriquer ou s'emboîter les unes dans les autres lorsque les extrémités du flan de tôle qui les portent sont jointes l'une à l'autre.

Ainsi, une fois les ancrages imbriqués les uns dans les autres, le diffuseur de gaz peut résister à la pression interne qui est prévue dans la chambre de diffusion.

La figure 2 représente en détail les ancrages de la zone de fermeture 20. Dans la mise en œuvre de la figure 2, la zone de fermeture 20 est réalisée par des dents ou tenons dont les formes sont évasées et complémentaires tels des queues d'aronde.

La vue de la figure 2 est une projection des formes complémentaires sur un plan tangent à la paroi 10, et dans cette projection, chaque ancrage présente une portion périphérique inclinée d'un angle de dépouille α par rapport à une direction tangentielle, elle-même contenue dans un plan transversal à la direction axiale du diffuseur de gaz. En conséquence, chaque dent ou tenon ou queue d'aronde est évasé en contre dépouille du double de l'angle de dépouille α, comme le montre la figure 2. De telles formes peuvent être des formes en queues d'aronde.

L'invention propose également d'implanter en zone périphérique de chaque ancrage un emboutissage ou bosselage 21, afin de faire refluer la matière de la paroi 10 une fois les ancrages imbriqués les uns dans les autres et verrouiller ainsi la zone de fermeture 20, afin de garantir la tenue, ainsi que l'étanchéité de la zone de fermeture 20.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à des dents ou tenons, mais on peut envisager des formes quelconques pour les ancrages, pourvu qu'il y ait des zones en dépouille qui forment une butée mécanique entre les deux extrémités du flan de zone une fois qu'elles sont jointes.

## Revendications

1. Générateur de gaz avec un diffuseur de gaz comprenant une paroi (10) définissant au moins une chambre de diffusion agencée pour recevoir des gaz de gonflage du générateur de gaz et les diffuser vers un organe de sécurité automobile, **caractérisé en ce que** la paroi (10) est formée à partir d'une découpe du flan de tôle et comprend au moins deux ancrages de formes complémentaires imbriqués les uns dans les autres pour former une zone de fermeture (20) du flan de tôle, dans lequel lesdits au moins deux ancrages ne présentent aucune surépaisseur ou relief par rapport au flan de tôle.

2. Générateur de gaz selon la revendication précédente, dans lequel chaque ancrage est agencé pour s'engager en butée mécanique avec un ancrage adjacent.

3. Générateur de gaz selon la revendication précédente, dans lequel les formes complémentaires desdits au moins deux ancrages présentent chacune une projection dans un plan tangent à la paroi (10), la projection comprenant au moins une portion périphérique inclinée qui est orientée d'un angle de dépouille (α) prédéterminé avec une direction tangentielle, pour former avec la portion périphérique inclinée d'un ancrage adjacent la portion de retenue à un effort créé par une pression de diffusion appliquée par les gaz de gonflage dans la chambre de diffusion.

4. Générateur de gaz selon la revendication précédente, dans lequel l'angle de dépouille (α) est compris dans une plage de valeurs allant de 20° à 40°.

5. Générateur de gaz selon l'une des revendications précédentes, dans lequel lesdits au moins deux ancrages de formes complémentaires sont des dents évasées.

6. Générateur de gaz selon l'une des revendications précédentes, dans lequel au moins un desdits au moins deux ancrages comprend un emboutissage ou bosselage (21) pour verrouiller ledit au moins un ancrage avec un ancrage adjacent.

7. Générateur de gaz selon l'une des revendications précédentes, comprenant au moins une portion en saillie dans la chambre de diffusion, telle qu'une patte (50), réalisée par découpe partielle de la paroi (10) et pliage.

8. Générateur de gaz selon l'une des revendications précédentes, dans lequel le flan de tôle est en acier présentant une résistance élastique (Re) supérieure ou égale à 300MPa, et un allongement avant rupture (A%) supérieur ou égal à 20%.

9. Générateur de gaz selon l'une des revendications précédentes, dans lequel le diffuseur de gaz présente au moins une extrémité soudée sur une autre pièce du générateur de gaz.

10. Générateur de gaz selon l'une des revendications précédentes, dans lequel le diffuseur de gaz présente un diamètre extérieur et une longueur inférieure au double du diamètre extérieur.

11. Module de sécurité comprenant au moins un générateur de gaz selon l'une des revendications précédentes.

12. Véhicule automobile comportant au moins un module de sécurité selon la revendication précédente.

## Patentansprüche

1. Gasgenerator mit einem Gasdiffusor, der eine Wand (10) aufweist, die mindestens eine Diffusionskammer definiert, die so angeordnet ist, dass sie vom Gasgenerator kommende Aufblasgase aufnimmt und sie in Richtung eines Sicherheitselements eines Kraftfahrzeugs diffundieren lässt, **dadurch gekennzeichnet, dass** die Wand (10) aus einem Ausschnitt des Blechzuschnitts gebildet ist und mindestens zwei Verankerungen mit komplementären Formen aufweist, die ineinander verschachtelt sind, um einen Verschlussbereich (20) des Blechzuschnitts zu bilden, wobei die mindestens zwei Verankerungen keine Überdicke oder kein Relief in Bezug auf den Blechzuschnitt aufweisen.

2. Gasgenerator nach dem vorhergehenden Anspruch, wobei jede Verankerung so angeordnet ist, dass sie mit einer benachbarten Verankerung mechanisch in Eingriff steht.

3. Gasgenerator nach dem vorhergehenden Anspruch, wobei die komplementären Formen der mindestens zwei Verankerungen jeweils einen Vorsprung in einer zur Wand (10) tangentialen Ebene aufweisen, wobei der Vorsprung mindestens einen geneigten peripheren Abschnitt aufweist, der unter einem vorbestimmten Freiwinkel (α) mit einer tangentialen Richtung ausgerichtet ist, um mit dem geneigten peripheren Abschnitt einer benachbarten Verankerung den Halteabschnitt gegenüber einer Kraft zu bilden, die durch einen von den Aufblasgasen in der Diffusionskammer aufgebrachten Diffusionsdruck erzeugt wird.

4. Gasgenerator nach dem vorhergehenden Anspruch, wobei der Freiwinkel (α) im Bereich von 20° bis 40° liegt.

5. Gasgenerator nach einem der vorhergehenden Ansprüche, wobei die mindestens zwei komplementär geformten Verankerungen konisch zulaufende Zähne sind.

6. Gasgenerator nach einem der vorhergehenden Ansprüche, wobei mindestens eine der mindestens zwei Verankerungen einen Ansatz oder Vorsprung (21) zum Verriegeln der mindestens einen Verankerung mit einer benachbarten Verankerung umfasst.

7. Gasgenerator nach einem der vorhergehenden Ansprüche, umfassend mindestens einen in die Diffusionskammer ragenden Abschnitt, wie z.B. eine Lasche (50), hergestellt durch teilweises Schneiden der Wand (10) und Biegen derselben.

8. Gasgenerator nach einem der vorhergehenden Ansprüche, wobei der Blechzuschnitt aus Stahl eine elastische Festigkeit (Re) von größer oder gleich 300 MPa und eine Bruchdehnung (A%) von größer oder gleich 20 % aufweist.

9. Gasgenerator nach einem der vorhergehenden Ansprüche, wobei der Gasdiffusor mindestens ein Ende aufweist, das mit einem anderen Teil des Gasgenerators verschweißt ist.

10. Gasgenerator nach einem der vorhergehenden Ansprüche, wobei der Gasdiffusor einen Außendurchmesser und eine Länge von weniger als dem doppelten Außendurchmesser hat.

11. Sicherheitsmodul, umfassend mindestens einen Gasgenerator nach einem der vorhergehenden Ansprüche.

12. Kraftfahrzeug mit mindestens einem Sicherheitsmodul nach dem vorhergehenden Anspruch.

## Claims

1. Gas generator having a gas diffuser comprising a wall (10) defining at least one diffusion chamber arranged so as to receive inflation gases from the gas generator and diffuse them toward an automobile safety element, **characterized in that** the wall (10) is formed from a cutout of the sheet metal blank and comprises at least two anchors of complementary shapes which are interlocked to form a closure zone (20) of the sheet metal blank, wherein said at least two anchors do not have any extra thickness or relief in comparison with the sheet metal blank.

2. Gas generator according to the preceding claim, wherein each anchor is arranged so as to engage in mechanical abutment with an adjacent anchor.

3. Gas generator according to the preceding claim, wherein the complementary shapes of said at least two anchors each have a projection in a plane which is tangential to the wall (10), the projection comprising at least one inclined peripheral portion which is oriented at a predetermined draft angle (α) with a tangential direction in order to form, together with the inclined peripheral portion of an adjacent anchor, the retaining portion at a force created by diffusion pressure applied by the inflation gases in the diffusion chamber.

4. Gas generator according to the preceding claim, wherein the draft angle (α) is within a range of values of from 20° to 40°.

5. Gas generator according to any of the preceding claims, wherein said at least two anchors of complementary shapes are flared teeth.

6. Gas generator according to any of the preceding claims, wherein at least one of said at least two anchors comprises a stamped or embossed piece (21) for locking said at least one anchor with an adjacent anchor.

7. Gas generator according to any of the preceding claims, comprising at least one portion projecting into the diffusion chamber, such as a tab (50), produced by partially cutting the wall (10) and folding.

8. Gas generator according to any of the preceding claims, wherein the sheet metal blank is made of steel having an elastic resistance (Re) greater than or equal to 300 MPa, and an elongation at break (A%) greater than or equal to 20%.

9. Gas generator according to any of the preceding claims, wherein the gas diffuser has at least one end welded to another part of the gas generator.

10. Gas generator according to any of the preceding claims, wherein the gas diffuser has an outer diameter and a length less than twice the outer diameter.

11. Safety module comprising at least one gas generator according to any of the preceding claims.

12. Motor vehicle comprising at least one security module according to the preceding claim.
